# EUROPEAN PATENT SPECIFICATION

(11) **EP 3 937 322 B1**
(45) Date of publication and mention of the grant of the patent: **24.04.2024**
(21) Application number: 21183680.4
(22) Date of filing: 05.07.2021
(51) Int. Cl.: H02G 3/08, H02G 3/22, H02G 3/10, H02G 15/007

(54) **A CABLE BOX WITH A CENTERING ARRANGEMENT**
EINE KABELBOX MIT EINER ZENTRIEREINRICHTUNG
UN BOÎTIER DE CÂBLE AVEC UN DISPOSITIF DE CENTRAGE

(30) Priority: 07.07.2020 IT 202000016402
(43) Date of publication of application: 12.01.2022
(73) Proprietor: Prysmian S.p.A., 20126 Milan (IT)
(72) Inventor: ABBIATI, Fabio, 20126 Milano (IT)
(74) Representative: Perani & Partners S.p.A.

(56) References cited:
- EP-A2- 2 763 256
- WO-A1-2017/121841
- WO-A1-2018/078127

## Description

### Field of the invention

The present invention relates to the field of equipment and components for the installation of cables on a cable box. In particular, the present invention relates to an arrangement for retaining and centering optical cables, electrical cables or hybrid cables to a cable box namely a terminal box or a junction box.

### Background of the invention

Typically, cables entering/exiting into/from a cable box have to be fixed and at the same time centered in order to guarantee a sealing effect and/or avoid excessive cable bending. Specifically, such effect is achieved centering the cables with respect to the openings of the cable box.

Standard fixation means for cables are cable ties which push cables against the supporting floor and out of alignment with sealing system and with the opening of the cable box. Furthermore, it is to be noted that the misalignment is more dangerous when the cable tie and sealing system/opening are near each other and when the known cable box as well as the sealing system/opening associated with have to manage a range of cable diameters. In fact such misalignment can cause macro-bending and leaking.

EP2763256 A2 discloses a cable duct having feed-through terminal which comprises seal press frames one of which is provided with support for fixing the cable at the feed-through terminal. The seals attached to one of the seal press frames, are made of soft sealing material and are provided with seal apertures. The cable is made to pass through the seal apertures which seal the inner space of the cable duct at the open end. Furthermore, the support allows the fixation of the cable relative to the seal apertures and to decouple the fixing function from the sealing function. It is to be noted that the support includes different fingers where cable tie fixes the cable.

The above mention system provides an arrangement that is able to fix the cable in different position of the finger, permitting a certain range of position and varying the curvature of the cable. However, as well known, with such fixing system it is required a soft material sealing or a gel-like sealing, especially in presence of different cable diameters.

US 5886300 A discloses a plug for plugging an opening in a sealing grommet wherein the grommet has an opening with a series of webs with spaces therebetween. The plug has a plug body with an outer sealing member, a tower, and an inner sealing member. The outer sealing member is received along an exterior side of the grommet. The inner sealing member is received within a space between the webs of the grommet. The tower connects the outer sealing member to the inner sealing member and extends beyond the inner sealing member to be received within the opening thereby sealing the opening of the grommet.

The fiber optic enclosure of US 5886300 A, in which grommets are retained, comprises a hanger portion to which the fibers are secured by means of hose clamps. Such securing arrangement may cause the misalignment of the cable with respect to the openings. WO 2017/121841 A1 discloses a sealed telecommunication's box with a support for anchoring a cable and fixate it to the support with a cable tie wrapped around the support and the cable.

### Summary of the invention

The applicant has tackled the problem of providing a centering arrangement able to center cables having different diameters with respect to the opening of the cable box as well as with respect to a sealing system associated to the opening of the cable box.

The Applicant has found that providing a centering arrangement with a centering element attached to the wall of the cable box by means of joining element and comprising two or more portion mutually adjacent and configured to rotate mutually and relatively to the joining element, allows to center the cable with respect to the opening.

Therefore, the present invention relates to a cable box according to claim 1.

According to one embodiment, the centering element extends outwardly the cable box from the joining element.

According to the invention, each portion is configured to rotate with respect to the adjacent portions and to the joining element to selectively support a part of the cable.

According to the invention, each portion is configured to rotate around the rotation axis from the longitudinal direction to a rotated direction perpendicular to the rotation axis.

According to the invention, the centering element comprises one or more hinge portions, each hinge portion connecting two adjacent portions and being configured to reversibly rotate each portion with respect to the adjacent portions.

According to one embodiment, the centering element comprises a connecting hinge pivotally connecting the centering element to the joining element.

According to one embodiment, each portion comprises a support surface configured to support the cable and maintain the cable aligned with the opening of the cable box. According to one embodiment, each portion comprises a retaining element configured to longitudinally retain a cable tie.

According to one embodiment, the centering element and the joining element are one-piece elements and the two or more portions are arranged along the longitudinal direction.

According to one embodiment, the longitudinal direction is inclined with respect to the wall of the cable box and each portion is configured to rotate around the rotation axis from the inclined longitudinal direction to a rotated direction perpendicular to the wall of the cable box and the rotation axis.

According to one embodiment, the longitudinal direction is perpendicular to the wall of the cable box and each portion is configured to rotate around the rotation axis from the longitudinal direction to a rotated direction inclined with respect to the wall of the cable box and perpendicular to the rotation axis.

According to one embodiment, the centering element projects from the wall along the longitudinal direction.

According to one embodiment, the opening has a center zone configured to receive the cable and each portion of the centering element is configured to rotate for centering the cable with respect to the center zone.

According to one embodiment, the cable box comprises at least one centering assembly comprising a cable to be centered with respect to the opening formed on the wall, a cable tie associated to a portion of the centering element of the centering arrangement and retaining the cable to said portion of the centering element.

According to one embodiment, the cable tie cooperates with the cable to rotate at least one portion with respect to the longitudinal direction around the rotation axis.

### Brief description of the drawings

The present invention will now be described in more detail hereinafter with reference to the accompanying drawings, in which some embodiments of the invention are shown.
FIG. 1 is a perspective view of the centering arrangement mounted on a cable box according to one embodiment of the present invention,
FIG. 2 is a side view of the centering arrangement of the FIG. 1;
FIG. 3 is a detail of the centering arrangement of FIG. 1;
FIG. 4 is schematic side view of a centering arrangement of FIG. 1 in a first configuration;
FIG. 5 is schematic side view of a centering arrangement of FIG. 1 in a second configuration;
FIG. 6 is schematic side view of a centering arrangement of FIG. 1 in a third configuration;
FIG. 7 is schematic side view of a centering arrangement of FIG. 1 in a fourth configuration;
FIG. 8 is a perspective view of a cable box according to one embodiment of the present invention.
FIG. 9 is a side view of the centering arrangement mounted on a cable box according to one embodiment of the present invention;
FIG. 10 is schematic side view of a centering arrangement of FIG. 9 in a first configuration;
FIG. 11 is schematic side view of a centering arrangement of FIG. 9 in a second configuration;
FIG. 12 is schematic side view of a centering arrangement of FIG. 1 in a third configuration.

### Detailed description

For the purpose of the present invention, a cable is deemed to be any optical cable or electrical cable or hybrid cable as well as a cable box is deemed to be adapted to selectively receive optical cables, electrical cables or hybrid cables.

The cables 2 can have a diameter comprised in a range between 7 and 13 mm. It is to be noted that the diameter can be narrower or wider than the mentioned range. Furthermore, each cable 2 has a developing axis C-C along which the cable 2 extends and enters/exits into/from the cable box 10.

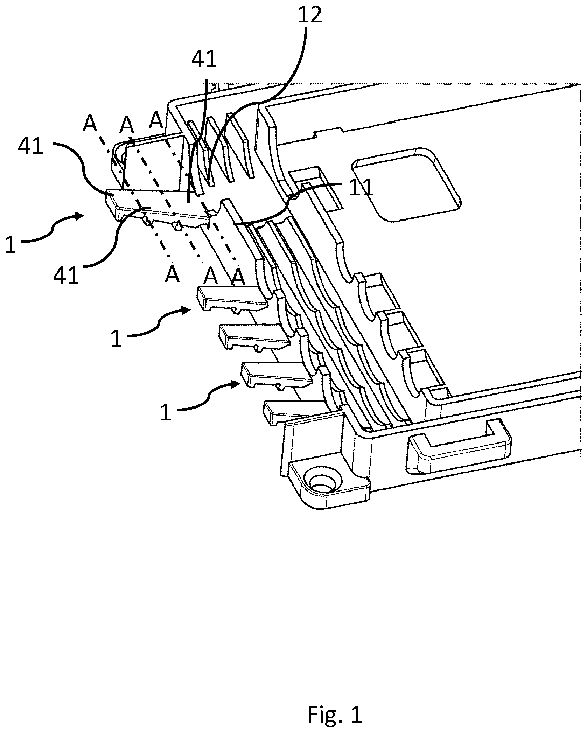

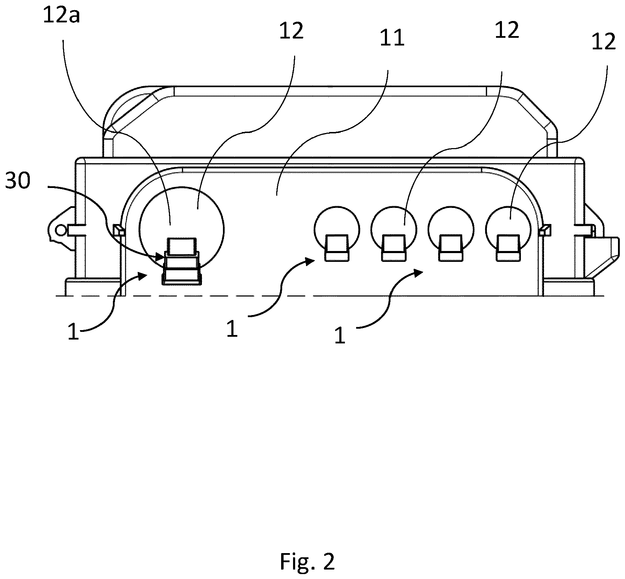

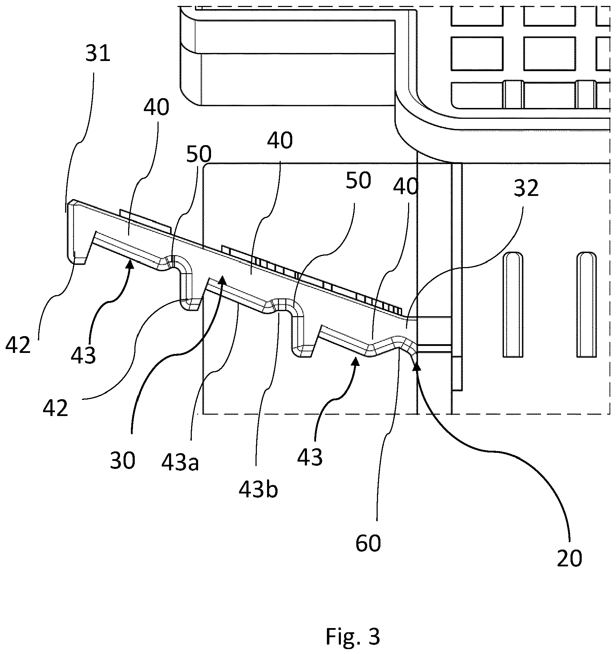

Figures 1-7 show centering arrangements 1 for centering cables 2 according to a first embodiment.

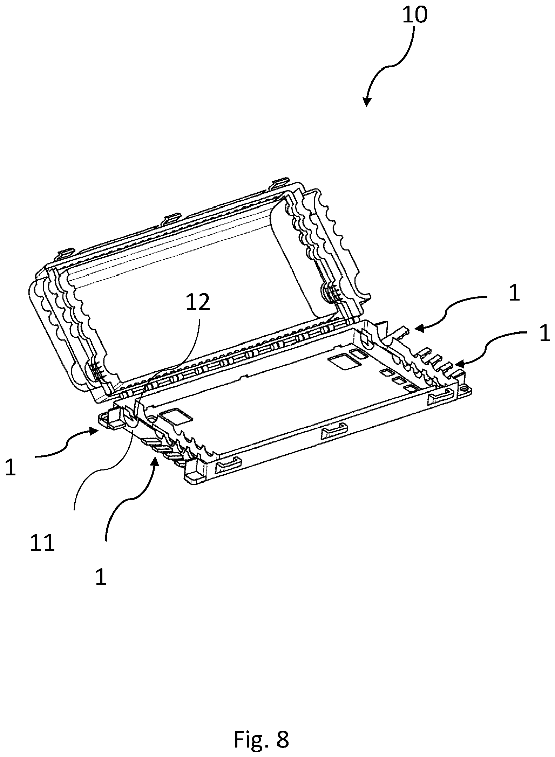

Such centering arrangement 1 can be associated to a cable box 10 shown in figure 8. The cable box 10 defines an inner volume wherein the cables 2 are inserted and/or from which come out. It is to be noted that each centering arrangement 1 is configured to center cables 2 having different diameters with respect to an opening 12 formed on a wall 11 of the cable box 10. The centering arrangement 1 can center cables 2 both from an outer surface of the cable box 10 (as shown in figures 1-12) and from an inner surface of the cable box 10 faced to the inner volume.

The centering arrangement 1 is configured to center the cable 2 aligning the relative developing axis C-C of the cable 2 with respect to the opening 12.

Each centering arrangement 1 comprises a joining element 20 configured to connect the centering arrangement 1 to the wall 11 of the cable box 10 and a centering element 30 extending from the joining element 20 and configured to support the cable 2 and then to center it. The joining element 20 can be associated both to the outer surface and to the inner surface of the cable box 10 such that the centering element 30 extends respectively outwardly the inner volume from the outer surface of the cable box 10 (as shown in figures 1-12) or inwardly the inner volume from the inner surface of the cable box 10.

Thanks to the outwardly and/or inwardly extension of the centering element 30, the centering arrangement 1 can center the cable 2 both outside and inside the cable box 10.

Specifically, the joining element 20 is attachable to the wall 11 of the cable box 10 to fix in a removable or unremovable way the centering arrangement 1 to the wall 11. It is to be noted that the joining element 20 can be attached to the outer surface and/or to the inner surface of the wall 11.

According to one embodiment, the centering arrangement 1 and the wall 11 are made with the same material and integral and continuous each other. Specifically, the centering arrangement 1 is one piece element with the wall 11.

The centering element 30 extends from the joining element 20 along a longitudinal direction X-X.

According to one embodiment, the centering element 30 extends outwardly the cable box 10 from the joining element 20 as shown in figures 1-12. According to an alternative embodiment, which can be combined with the previous one, the centering element 30 extends inwardly the cable box 10 from the joining element 20 (not shown).

Hereinafter, the embodiment shown in the figures 1-12 is described, wherein the centering element 30 extends outwardly the cable box 10 from the joining element 20. It is to be noted that the same technical features can be applied *mutatis mutandis* to the inwardly extension embodiment.

The latter is inclined with respect to the wall 11. Specifically, the longitudinal direction X-X defines an angle with the wall 11 comprised between 0° and 180°. According to one embodiment, the angle is comprised between the 0° and 90°. In some embodiments, the centering element 30 extends along the longitudinal direction X-X inclined with respect the joining element 20 which is attachable to the wall 11.

In this way, the centering element 30 can support a cable 2 passing through the opening 12. Specifically, the centering element 30 is configured to align and center the supported cable 2 with respect to the opening 12. In detail, the centering element 30 regulates the position of the developing axis C-C of the cable 2 with respect to the opening 12.

The centering element 30 comprises two or more portions 40 arranged mutually adjacent along the longitudinal direction X-X. Specifically, the portions 40 are consecutively arranged along the longitudinal direction X-X from the joining element 20. In other words, the portions 40 are arranged one subsequent to the other from the joining element 20 to a free end 31 of the centering element 30 opposed to an end 32 attached to the joining element 20.

According to one embodiment, the two or more portions 40 of the centering element 30 are made with the same material and integral and continuous each other. Specifically, the centering element 30 is one piece element with the joining element 20.

The portions 40 are configured to rotate mutually and relative to the joining element 20 around a rotation axis A-A perpendicular to the longitudinal direction X-X. Each portion 40 can rotate independently from the adjacent portion 40 and to the joining element 20.

According to one embodiment, each portion 40 is configured to rotate with respect to the adjacent portions 40 and to the joining element 20 to selectively support a part 2a, 2b, 2c of the cable 2. It is to be noted that, only the portion 40 which supports a part 2a, 2b, 2c of the cable 2 and to which is attached is configured to rotate in order to align the cable 2 with respect to the opening 12.

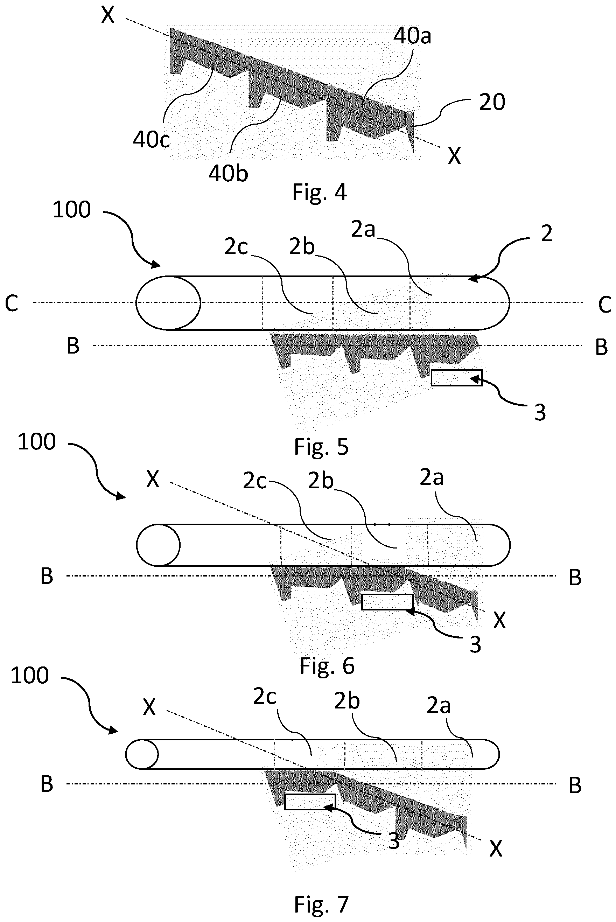

Figures 5-7 show portions 40 rotated as function of the part of the cable 2 supported.

According to one embodiment, each portion 40 is configured to rotate around the rotation axis A-A from the inclined longitudinal direction X-X to a rotated direction B-B perpendicular to the wall 11 of the cable box 10 and to the rotation axis A-A.

Specifically, the portions 40 consecutive with respect to the rotated portion 40 from the joining element 20 are configured to remain aligned along the rotated direction B-B with the rotated portion 40 in order to support and center the cable 2.

According to one embodiment, the centering element 30 can pass from an initial configuration wherein the longitudinal direction X-X is inclined with respect to the wall 10 as shown in figure 4 to rotated configurations wherein at least one portion 40 is aligned with the rotated direction B-B as shown in figures 5-7.

According to the invention, the centering element 30 comprises one or more hinge portions 50. Each hinge portion 50 is configured to connect two adjacent portions 40 and to reversibly rotate each portion 30 with respect to the adjacent portions 40.

Specifically, the hinge portions 50 elastically flex in order to allow the rotation of the relative portions 40 from the inclined longitudinal direction X-X to the rotated direction B-B and vice-versa. In detail, the hinge portions 50 are configured to flex as function of the parts 2a, 2b, 2c of the cable 2 supported on the portions 40.

According to one embodiment, the centering element 30 comprises a connecting hinge 60 pivotally connecting the centering element 30 to the joining element 20. Specifically, the connecting hinge 60 is configured to allow the portion 40 of the centering element 30 to rotate with respect to the joining element 20 and then to the wall 11.

In detail, the connecting hinge 60 elastically flexes in order to allow the rotation of the portion 40 connected to the joining element 20 from the inclined longitudinal direction X-X to the rotated direction B-B and vice-versa.

According to one embodiment, the hinge portions 50 and the connecting hinge 60 are made of resilient material able to maintain the inclined longitudinal direction X-X and to selectively rotate a portion 40 with respect to the adj acent portion 40 or to the joining element 20. The elastic material can be chosen between polypropylene (PP) or acrylonitrile butadiene styrene (ABS) or acrylonitrile styrene acrylate (ASA).

According to one embodiment, the centering element 30 has a variable thickness along the longitudinal direction X-X along with it is developed. Specifically, the centering element 30 has a taper thickness between two adjacent portions 40 and between the centering element and the joining element 20. In other words, the centering element 30 has taperings between two adjacent portions 40 and between the centering element and the joining element 20. In detail, the portions 40 may have a trapezoidal shape.

Accordingly, the taper thickness between two adjacent portions 40 defines the hinge portion 50, Instead, the taper thickness between the centering element 30 and the joining element 20 defines the connecting hinge 60.

Thanks to the thickness and the material, it is possible to obtain a one piece centering arrangement able to support and center a cable in a cable box and comprising portions rotatable mutually and relative to the joining element.

Furthermore, the tapered thickness between the centering element 30 and the joining element 20 makes such connecting hinge 60 stiffer than the other hinge portions 50. The trapezoidal shape of the other hinge portions has the same effect of stiffening. This arrangement is useful to provide only one section for mutual rotation and to better withstand traction.

According to one embodiment, each portion 40 comprises a support surface 41 for optical cables 2 configured to support the cable 2 and maintain the cable 2 aligned with the opening 12 of the cable box 10.

Accordingly, each portion 40 comprises a bottom surface 43 opposed to the support surface 41. Each bottom surface 43 has a retention portion 43a configured to receive a part of a cable tie 3 and inclined portion 43b which defines the taper thickness.

According to one embodiment, each portion 40 comprises a retaining element 42 configured to longitudinally retain a cable tie 3. Specifically, each retaining element 42 protrudes from the bottom surface 43 of each portion 40. In detail, the retaining element 42 protrudes from the retention portion 43a away from the relative inclined portion 43b.

It is to be noted that the retaining elements 42 of two adjacent portions 40 cooperate to longitudinally retain the cable tie 3. As a matter of fact, the rotated portion 40 to which is associated the cable tie 3 retains by means of relative retaining element 42 the cable tie 3 from longitudinal movement away from the joining element 20. Accordingly, the retaining element 42 of previous unrotated portion 40 prevents longitudinal movement of the cable tie 3 towards the joining element 20.

In addition, the joining element 20 is also configured to prevent longitudinal movement of the cable tie 3 cooperating with the retaining element 42 of the portion 40 proximate to the joining element 20 itself.

According to one embodiment, the two or more portions 40 of the centering element 30 comprise at least a first portion 40a connected to the joining element 20 and a second portion 40b adjacently connected to the first portion 40b along the longitudinal direction X-X.

According to one embodiment, the two or more portions 40 comprise a further third portion 40c adjacently connected to the second portion 40b along the longitudinal direction X-X.

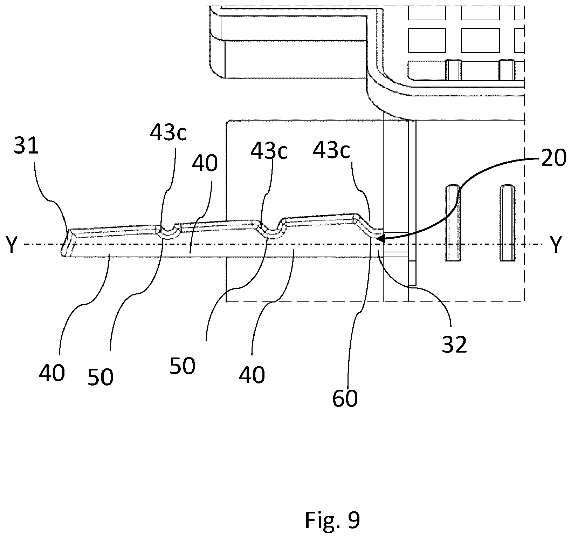

Figures 9-12 show a second embodiment of the centering arrangement 1. Specifically, the second embodiment differs from the first embodiment of figures 1-3 in that the longitudinal direction Y-Y, along which the centering element 30 extends, is perpendicular to the wall 11.

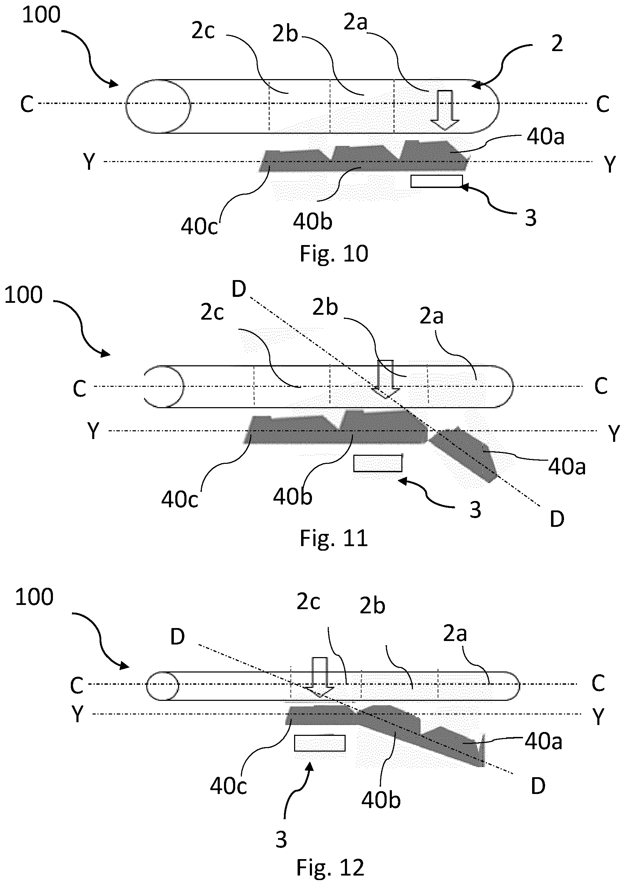

Therefore, the centering arrangement 1 of the second embodiment is configured to center the cable 2 with respect to the opening 12 by selectively rotating the portion 40 from the longitudinal direction Y-Y perpendicular to the wall 12 to a rotated direction D-D inclined with respect to the wall 12, as shown in figures 11 and 12.

Specifically, the centering element 30 can pass from an initial configuration, wherein the longitudinal direction Y-Y is perpendicular to the wall 10 as shown in figure 10, to rotated configurations, wherein at least one portion 40 is aligned with the rotated direction D-D as shown in figures 11-12.

Accordingly, in the second embodiment, the support surface 41 has an inclined portion 43c which defines the taper thickness and then the hinge portions 50 and the connecting hinge 60.

In addition, the elastic material can be chosen between polypropylene (PP) or acrylonitrile butadiene styrene (ABS) or acrylonitrile styrene acrylate (ASA) or polyethylene (PE). The latter guarantees softness and deformability to pass from the longitudinal direction Y-Y perpendicular to the wall 11 to the rotated direction D-D inclined with respect to the wall.

Figures 4-7 show a centering assembly 100.

The centering assembly 100 comprises the cable 2 to be centered with respect to the opening 12 formed on the wall 11 of the cable box 10.

The centering assembly 100 comprises at least one centering arrangement 1 supporting and centering the cable 2 with respect to the opening 12. It is to be noted that the centering element 30 of the centering arrangement 1 can project outwardly the cable box 10 from the outer surface (as shown in figures 1-12) and/or inwardly the cable box 10 from the inner surface.

The centering assembly 100 further comprises a cable tie 3 associated to a portion 40 of the centering element 30 of the centering arrangement 1. The cable tie 3 retains the cable 2 to the portion 40 of the centering element.

According to one embodiment, the cable tie 3 cooperates with the cable 2 to rotate at least one portion 40 with respect to the inclined longitudinal direction X-X around the rotation axis A-A. Specifically, the cable tie 3 fixes a part 2a, 2b, 2c of the cable 2 to a portion 40 causing the rotation of it with respect the adjacent portion 40 or to the joining element 20.

In detail, the cooperation of the cable 2 and the cable tie 3 is configured to rotate the portion 40 to which the part 2a, 2b, 2c of the cable 2 is attached, to maintain aligned with the rotated direction B-B the portions 40 subsequent to the rotated portion and to maintain unrotated along the inclined longitudinal direction X-X the portions 40 previous to the rotated portion 40.

Figures 5-7 show examples of rotated configurations according to the first embodiment of the centering arrangement, in which three portions 40a, 40b 40c are shown. It is worthwhile to note that the same operations of rotation, supporting and centering can be obtained with a centering arrangement with two portions or more than three portions.

As a matter of fact, when the cable tie 3 retains the part 2a of the cable 2 to the first portion 40a (figure 5), only the latter rotates and the subsequent portions 40b and 40c are maintained aligned with the first portion 40a along the rotated direction B-B by the cable 2.

When the cable tie 3 retains the part 2b of the cable 2 to the second portion 40b (figure 6), only the latter rotates and the subsequent third portion 40c is maintained aligned with the second portion 40b along the rotated direction B-B by the cable 2. The first portion 40a remains aligned with the inclined longitudinal direction X-X.

Finally, when the cable tie 3 retains the part 2c of the cable 2 to the third portion 40b (figure 6), only the latter rotates and previous portions 40a, 40b are maintained aligned with the inclined longitudinal direction X-X.

In this way, it is possible to align the cable 2 with respect to the opening 12 regulating the developing axis C-C of the cable 2.

According to one embodiment, the cable tie 3 is configured to retain a cable 2 to a portion 40 as a function of the diameter of the cable. In detail, the cable tie 3 retains the wider cables to the portion 40 proximate to the joining element 20 and narrower cable in the subsequent portion 40.

It is to be noted that figures 10-12 show the centering assembly 100 with the second embodiment of the centering arrangement 1.

In this case, the cable tie 3 cooperates with the cable 2 to rotate at least one portion 40 with respect to the longitudinal direction Y-Y around the rotation axis A-A. Specifically, the cable tie 3 fixes a part 2a, 2b, 2c of the cable 2 to a portion 40 causes the rotation of the previous one with respect the adjacent portions 40. It is to be noted that, when the cable tie 3 is associated to the portion 40 adjacent to the joining element 20, the cable tie 3 does not cause any rotations.

Specifically, the cooperation of the cable 2 and the cable tie 3 moves the cable along a direction perpendicular to the longitudinal direction Y-Y in order to align the cable with respect to the opening 12. Such cooperation rises the developing axis C-C of the cable 2 to center it with respect to the opening 12.

In detail, the cooperation of the cable 2 and the cable tie 3 is configured to rotate the portions 40 to which the part 2a, 2b, 2c of the cable 2 is attached, to maintain it aligned with the rotated direction D-D. Such cooperation maintains the portion to which the part 2a, 2b, 2c of the cable 2 is attached and the eventually subsequent one unrotated along the longitudinal direction Y-Y.

Figures 10-12 show examples of rotated configurations according to the second embodiment of the centering arrangement 1, in which three portions 40a, 40b 40c are shown. It is worthwhile to note that the same operations of rotation, supporting and centering can be obtained with a centering arrangement with two portions or more than three portions.

As a matter of fact, when the cable tie 3 retains the part 2a of the cable 2 to the first portion 40a (figure 10), portions 40 do not rotate and remain aligned with respect to the longitudinal direction Y-Y perpendicular to the wall. In this configuration, the cable 2 is resting on the centering arrangement and the cable tie retains it.

When the cable tie 3 retains the part 2b of the cable 2 to the second portion 40b (figure 6), the first portion 40a rotates and the subsequent second portion 40b and the third portion 40c are maintained aligned along the longitudinal direction Y-Y. The first portion 40a remains aligned with the inclined rotated direction D-D.

Finally, when the cable tie 3 retains the part 2c of the cable 2 to the third portion 40b (figure 6), the first portion 40a and the second portion 40b rotates along the inclined rotated direction D-D. Third portion 40c is maintained aligned with the longitudinal direction Y-Y.

Figure 8 show a cable box 10.

The cable box 10 comprises a wall 11 having at least one opening 12 for the passage of the cable 2 and at least one centering center assembly 100 above described wherein the joining element 20 is fixed to the wall 11 proximate to the opening 12 of the wall 11 for centering the cable 2 with respect to the opening 12. The cable box 10 defines an inner volume bordered by the wall 11 which has an inner surface faced to the inner volume and an outer surface opposed to the inner surface.

According to one embodiment, the centering element 30 projects from the wall 11 along the longitudinal direction X-X inclined with respect to the wall 11. In this way, it is possible to center the cable 2 with respect to the opening 12. It is to be noted that the centering element 30 can project outwardly the cable box 10 from the outer surface (as shown in figures 1-12) and/or inwardly the cable box 10 from the inner surface.

According to one embodiment, the opening 12 has a center zone 12a configured to receive the cable 2, each portion 40 of the centering element 30 is configured to rotate for centering the cable 2 with respect to the center zone 12a. Specifically, the centering arrangement 1 is configured to center the developing axis C-C of the cable with respect to the center zone 12a.

In detail, by rotation of the portions 40 the centering arrangement 1 aligns the developing axis C-C with the rotated direction B-B and then center the cable 2 with respect to the opening 12.

The centering arrangement 1 regulates an height of the developing axis C-C of the cable with respect to the opening 12 rotating a portion 40 around the rotation axis A-A and supporting the cable 2 with the support surface 41 of the rotated portion 40 and of the subsequent ones along the rotated direction B-B aligned with the relative developing axis C-C of the cable.

It is to be noted that, the height at which the developing axis C-C of the cable 2 is centered is a function of the diameter of the cable 2 as well as to the rotated portion 40.

According to a further embodiment not shown in the figures, the cable box 10 comprises the centering assembly 100 which comprises the second embodiment of the centering arrangement 1.

## Claims

1. A cable box (10) comprising:
- a wall (11) having at least one opening (12) for the passage of a cable (2),
- at least one centering arrangement (1) for centering the cable (2) with respect to the at least one opening (12) formed on the wall (11), said centering arrangement (1) comprising:
- a joining element (20) attached to the wall (11) of the cable box (10) proximate to the at least one opening (12) of the wall (11),
- a centering element (30) extending from the joining element (20) along a longitudinal direction (X-X, Y-Y), the centering element (30) being configured to support a cable (2) passing through the opening (12),
**characterized in that**:
- the centering element (30) comprises two or more portions (40) arranged mutually adjacent along the longitudinal direction (X-X, Y-Y) and configured to rotate mutually and relative to the joining element (20) around a rotation axis (A-A) perpendicular to the longitudinal direction (X-X, Y-Y), the centering element (30) comprising one or more hinge portions (50), each hinge portion (50) connecting two adjacent portions (40) and being configured to reversibly rotate each portion (40) with respect to the adjacent portions (40).

2. The cable box (10) according to claim1, wherein the centering element (30) extends outwardly the cable box (10) from the joining element (20).

3. The cable box (10) according to claim 1 or 2, wherein each portion (40) is configured to rotate with respect to the adjacent portions (40) and to the joining element (20) to selectively support a part (2a, 2b, 2c) of the cable (2).

4. The cable box (10) according to any claims 1 to 3, wherein each portion (40) is configured to rotate around the rotation axis (A-A) from the longitudinal direction (X-X, Y-Y) to a rotated direction (B-B, D-D) perpendicular to the rotation axis (A-A).

5. The cable box (10) according to any claims 1 to 4, wherein the centering element (30) comprises a connecting hinge (60) pivotally connecting the centering element (30) to the joining element (20).

6. The cable box (10) according to any claims 1 to 5, wherein each portion (40) comprises a support surface (41) configured to support the cable (2) and maintain the cable (2) aligned with the opening (12) of the cable box (10).

7. The cable box (10) according to any claims 1 to 6, wherein each portion (40) comprises a retaining element (42) configured to longitudinally retain a cable tie (3).

8. The cable box (10) according to any claims 1 to 7, wherein
- the centering element (30) and the joining element (20) are one-piece element;
- the two or more portions (40) are arranged along the longitudinal direction (X-X, Y-Y).

9. The cable box (10) according to any claims 1 to 8, wherein:
- the longitudinal direction (X-X) is inclined with respect to the wall (11) of the cable box (10); and
- each portion (40) is configured to rotate around the rotation axis (A-A) from the inclined longitudinal direction (X-X) to a rotated direction (B-B) perpendicular to the wall (11) of the cable box (10) and the rotation axis (A-A).

10. The cable box (10), according to any claims 1 to 9, wherein:
- the longitudinal direction (Y-Y) is perpendicular to the wall (11) of the cable box (10); and
- each portion (40) is configured to rotate around the rotation axis (A-A) from the longitudinal direction (Y-Y) to a rotated direction (D-D) inclined with respect to the wall (11) of the cable box (10) and perpendicular to the rotation axis (A-A).

11. The cable box (10), according to any claims 1 to 10, wherein the centering element (30) projects from the wall (11) along the longitudinal direction (X-X, Y-Y).

12. The cable box (10), according to any claims 1 to 11, wherein:
- the opening (12) has a center zone (12a) configured to receive the cable (2),
- each portion (40) of the centering element (30) is configured to rotate for centering the cable (2) with respect to the center zone (12a).

13. The cable box (10) according to any claims 1 to 12, comprising at least one centering assembly (100) comprising:
- a cable (2) to be centered with respect to the opening (12) formed on the wall (11),
- a cable tie (3) associated to a portion (40) of the centering element (30) of the centering arrangement (1) and retaining the cable (2) to said portion (40) of the centering element (30).

14. The cable box (10), according to claim 13, wherein the cable tie (3) cooperates with the cable (2) to rotate at least one portion (40) with respect to the longitudinal direction (X-X, Y-Y) around the rotation axis (A-A).

## Patentansprüche

1. Kabelbox (10) mit:
- einer Wand (11), die mit mindestens eine Öffnung (12) für den Durchgang eines Kabels (2) aufweist,
- mindestens einer Zentriereinrichtung (1) zum Zentrieren des Kabels (2) in Bezug auf die mindestens eine in der Wand (11) ausgebildete Öffnung (12), wobei die Zentriereinrichtung (1) Folgendes umfasst:
- ein Verbindungselement (20), das an der Wand (11) der Kabelbox (10) in der Nähe der mindestens einen Öffnung (12) der Wand (11) befestigt ist,
- ein Zentrierelement (30), das sich von dem Verbindungselement (20) entlang einer Längsrichtung (X-X, Y-Y) erstreckt, wobei das Zentrierelement (30) so konfiguriert ist, dass es ein durch die Öffnung (12) geführtes Kabel (2) trägt, **dadurch gekennzeichnet, dass**:
- das Zentrierelement (30) zwei oder mehr Abschnitte (40) umfasst, die entlang der Längsrichtung (X-X, Y-Y) aneinandergrenzend angeordnet und so konfiguriert sind, dass sie sich gegenseitig und relativ zu dem Verbindungselement (20) um eine Drehachse (A-A) senkrecht zu der Längsrichtung (X-X, Y-Y) drehen, wobei das Zentrierelement (30) einen oder mehrere Gelenkabschnitte (50) umfasst, wobei jeder Gelenkabschnitt (50) zwei benachbarte Abschnitte (40) verbindet und so konfiguriert ist, dass er jeden Abschnitt (40) in Bezug auf die benachbarten Abschnitte (40) reversibel dreht.

2. Kabelbox (10) nach Anspruch 1, wobei sich das Zentrierelement (30) von dem Verbindungselement (20) aus der Kabelbox (10) nach außen erstreckt.

3. Kabelbox (10) nach Anspruch 1 oder 2, wobei jeder Abschnitt (40) so konfiguriert ist, dass er sich in Bezug auf die benachbarten Abschnitte (40) und das Verbindungselement (20) dreht, um selektiv einen Teil (2a, 2b, 2c) des Kabels (2) zu stützen.

4. Kabelbox (10) nach einem der Ansprüche 1 bis 3, wobei jeder Abschnitt (40) so konfiguriert ist, dass er sich um die Drehachse (A-A) aus der Längsrichtung (X-X, Y-Y) in eine Drehrichtung (B-B, D-D) senkrecht zur Drehachse (A-A) dreht.

5. Kabelbox (10) nach einem der Ansprüche 1 bis 4, wobei das Zentrierelement (30) ein Verbindungsscharnier (60) aufweist, das das Zentrierelement (30) schwenkbar mit dem Verbindungselement (20) verbindet.

6. Kabelbox (10) nach einem der Ansprüche 1 bis 5, wobei jeder Abschnitt (40) eine Stützfläche (41) umfasst, die so konfiguriert ist, dass sie das Kabel (2) stützt und das Kabel (2) mit der Öffnung (12) der Kabelbox (10) ausgerichtet hält.

7. Kabelbox (10) nach einem der Ansprüche 1 bis 6, wobei jeder Abschnitt (40) ein Halteelement (42) umfasst, das so konfiguriert ist, dass es einen Kabelbinder (3) in Längsrichtung festhält.

8. Kabelbox (10) nach einem der Ansprüche 1 bis 7, wobei
- das Zentrierelement (30) und das Verbindungselement (20) ein einteiliges Element sind;
- die zwei oder mehr Abschnitte (40) entlang der Längsrichtung (X-X, Y-Y) angeordnet sind.

9. Kabelbox (10) nach einem der Ansprüche 1 bis 8, wobei:
- die Längsrichtung (X-X) in Bezug auf die Wand (11) der Kabelbox (10) geneigt ist; und
- jeder Abschnitt (40) so konfiguriert ist, dass er sich um die Drehachse (A-A) aus der geneigten Längsrichtung (X-X) in eine Drehrichtung (B-B) senkrecht zu der Wand (11) der Kabelbox (10) und der Drehachse (A-A) dreht.

10. Kabelbox (10) nach einem der Ansprüche 1 bis 9, wobei:
- die Längsrichtung (Y-Y) senkrecht zu der Wand (11) der Kabelbox (10) verläuft; und
- jeder Abschnitt (40) so konfiguriert ist, dass er sich um die Drehachse (A-A) aus der Längsrichtung (Y-Y) in eine Drehrichtung (D-D) dreht, die in Bezug auf die Wand (11) der Kabelbox (10) geneigt ist und senkrecht zur Drehachse (A-A) steht.

11. Kabelbox (10) nach einem der Ansprüche 1 bis 10, wobei das Zentrierelement (30) entlang der Längsrichtung (X-X, Y-Y) von der Wand (11) ab steht.

12. Kabelbox (10) nach einem der Ansprüche 1 bis 11, wobei:
- die Öffnung (12) einen Mittelbereich (12a) aufweist, der zur Aufnahme des Kabels (2) ausgebildet ist,
- jeder Abschnitt (40) des Zentrierelements (30) so konfiguriert ist, dass er sich zum Zentrieren des Kabels (2) in Bezug auf die Mittelzone (12a) dreht.

13. Kabelbox (10) nach einem der Ansprüche 1 bis 12, mit mindestens einer Zentrieranordnung (100), die Folgendes umfasst:
- ein Kabel (2), das in Bezug auf die in der Wand (11) ausgebildete Öffnung (12) zentriert werden soll,
- einen Kabelbinder (3), der mit einem Abschnitt (40) des Zentrierelements (30) der Zentriereinrichtung (1) verbunden ist und das Kabel (2) an dem Abschnitt (40) des Zentrierelements (30) festhält.

14. Kabelbox (10) nach Anspruch 13, wobei der Kabelbinder (3) mit dem Kabel (2) zusammenwirkt, um mindestens einen Abschnitt (40) in Bezug auf die Längsrichtung (X-X, Y-Y) um die Drehachse (A-A) zu drehen.

## Revendications

1. Boîtier pour câble (10) comprenant :
- une paroi (11) ayant au moins une ouverture (12) pour le passage d'un câble (2),
- au moins un agencement de centrage (1) pour centrer le câble (2) par rapport à l'au moins une ouverture (12) formée sur la paroi (11), ledit agencement de centrage (1) comprenant :
- un élément de jonction (20) attaché à la paroi (11) du boîtier pour câble (10) à proximité de l'au moins une ouverture (12) de la paroi (11),
- un élément de centrage (30) s'étendant depuis l'élément de jonction (20) le long d'une direction longitudinale (X-X, Y-Y), l'élément de centrage (30) étant configuré pour supporter un câble (2) passant à travers l'ouverture (12),
**caractérisé en ce que** :
- l'élément de centrage (30) comprend deux portions (40) ou plus agencées adjacentes l'une à l'autre le long de la direction longitudinale (X-X, Y-Y) et configurées pour tourner l'une par rapport à l'autre et par rapport à l'élément de jonction (20) autour d'un axe de rotation (A-A) perpendiculaire à la direction longitudinale (X-X, Y-Y), l'élément de centrage (30) comprenant une ou plusieurs portions d'articulation (50), chaque portion d'articulation (50) reliant deux portions adjacentes (40) et étant configurée pour faire tourner chaque portion (40) de manière réversible par rapport aux portions adjacentes (40).

2. Boîtier pour câble (10) selon la revendication 1, dans lequel l'élément de centrage (30) s'étend vers l'extérieur du boîtier pour câble (10) à partir de l'élément de jonction (20).

3. Boîtier pour câble (10) selon la revendication 1 ou 2, dans lequel chaque portion (40) est configurée pour tourner par rapport aux portions adjacentes (40) et à l'élément de j onction (20) pour supporter sélectivement une partie (2a, 2b, 2c) du câble (2).

4. Boîtier pour câble (10) selon l'une quelconque des revendications 1 à 3, dans lequel chaque portion (40) est configurée pour tourner autour de l'axe de rotation (A-A) depuis la direction longitudinale (X-X, Y-Y) jusqu'à une direction tournée (B-B, D-D) perpendiculaire à l'axe de rotation (A-A).

5. Boîtier pour câble (10) selon l'une quelconque des revendications 1 à 4, dans lequel l'élément de centrage (30) comprend une articulation de liaison (60) reliant de manière pivotante l'élément de centrage (30) à l'élément de jonction (20).

6. Boîtier pour câble (10) selon l'une quelconque des revendications 1 à 5, dans lequel chaque portion (40) comprend une surface de support (41) configurée pour supporter le câble (2) et maintenir le câble (2) aligné sur l'ouverture (12) du boîtier pour câble (10).

7. Boîter pour câble (10) selon l'une quelconque des revendications 1 à 6, dans lequel chaque portion (40) comprend un élément de retenue (42) configuré pour retenir longitudinalement un serre-câbles (3).

8. Boîtier pour câble (10) selon l'une quelconque des revendications 1 à 7, dans lequel
- l'élément de centrage (30) et l'élément de jonction (20) sont d'un seul tenant ;
- les deux portions (40) ou plus sont agencées le long de la direction longitudinale (X-X, Y-Y).

9. Boîtier pour câble (10) selon l'une quelconque des revendications 1 à 8, dans lequel :
- la direction longitudinale (X-X) est inclinée par rapport à la paroi (11) du boîtier pour câble (10) ; et
- chaque portion (40) est configurée pour tourner autour de l'axe de rotation (A-A) depuis la direction longitudinale (X-X) inclinée jusqu'à une direction tournée (B-B) perpendiculaire à la paroi (11) du boîtier pour câble (10) et à l'axe de rotation (A-A).

10. Boîtier pour câble (10) selon l'une quelconque des revendications 1 à 9, dans lequel :
- la direction longitudinale (Y-Y) est perpendiculaire à la paroi (11) du boîtier pour câble (10) ; et
- chaque portion (40) est configurée pour tourner autour de l'axe de rotation (A-A) depuis la direction longitudinale (Y-Y) jusqu'à une direction tournée (D-D) inclinée par rapport à la paroi (11) du boîtier pour câble (10) et perpendiculaire à l'axe de rotation (A-A).

11. Boîtier pour câble (10) selon l'une quelconque des revendications 1 à 10, dans lequel l'élément de centrage (30) fait saillie depuis la paroi (11) le long de la direction longitudinale (X-X, Y-Y).

12. Boîtier pour câble (10) selon l'une quelconque des revendications 1 à 11, dans lequel :
- l'ouverture (12) présente une zone centrale (12a) configurée pour recevoir le câble (2),
- chaque portion (40) de l'élément de centrage (30) est configurée pour tourner pour centrer le câble (2) par rapport à la zone centrale (12a).

13. Boîtier pour câble (10) selon l'une quelconque des revendications 1 à 12, comprenant au moins un ensemble de centrage (100) comprenant :
- un câble (2) à centrer par rapport à l'ouverture (12) formée sur la paroi (11),
- un serre-câbles (3) associé à une portion (40) de l'élément de centrage (30) de l'agencement de centrage (1) et retenant le câble (2) à ladite portion (40) de l'élément de centrage (30).

14. Boîtier pour câble (10) selon la revendication 13, dans lequel le serre-câbles (3) coopère avec le câble (2) pour faire tourner au moins une portion (40) par rapport à la direction longitudinale (X-X, Y-Y) autour de l'axe de rotation (A-A).
